# EUROPEAN PATENT APPLICATION

(11) **EP 2 081 108 A1**
(43) Date of publication of application: **22.07.2009**
(21) Application number: 08100569.6
(22) Date of filing: 16.01.2008
(51) Int. Cl.: G06F 3/048

(54) **System and Method of Navigating Graphical User Interface Elements**

(71) Applicant: Research in Motion Limited, Waterloo, ON N2L 3W8 (CA)
(72) Inventor: Fomitchev, Mikhail, Thornhill Ontario L4J 8Z3 (CA); Lacey, Jon-David, Richmond Hill Ontario L4S 1X4 (CA); Paas, Julian, Mississauga Ontario L5H 3L2 (CA)
(74) Representative: Patel, Binesh

(57) **Abstract**

Described are a system and method of navigating graphical user interface comprising a plurality of visual elements (620). The system comprises an input component (905) for receiving an input and generating a navigational input based on the input, a visual element analyzer (910) for analyzing visual elements (410) to determine if the visual elements (410) have an associated blockade condition (415), and for passing navigational inputs. The system further comprises a blockade condition analyzer (915) for analyzing visual elements (410) with an associated blockade (415) to determine if the navigational input satisfies the blockade condition and an output component (920) for receiving the navigational inputs passed from the visual element analyzer and for generating the input based on the navigational input. The method comprises the steps of receiving an input and generating a navigational input based on the input (800), analyzing visual elements to determine if the visual elements have an associated blockade condition (805), generating the input based on the navigational input (830) if the visual elements don't have an associated blockade condition, analyzing visual elements with an associated blockade to determine if the navigational input satisfies the blockade condition (820), and generating the input based on the navigational input (830) if the blockade condition is satisfied.

## Description

### TECHNICAL FIELD

The present patent disclosure relates generally to graphical user interfaces, and in particular to a system and method of navigating graphical user interface elements.

### BACKGROUND

Devices with a graphical user interface display visual elements. The visual elements can be navigated using an input device. The visual elements may be, for example, icons representing programs. The visual elements may have a focused and unfocused state, indicating which visual element is currently selected, and thus further inputs relate to, such as for example, starting the program represented by a focused icon.

The input devices may allow for input control in multiple dimensions. For example, a scroll wheel provides input control in one dimension, such as for example, up/down or left/right. A track ball, or mouse may provide input control in two dimensions, such as in both the x and y directions. The input device may control what visual element has focus. For example, in graphical user interface with a pointer, the input device controls the position of the pointer on the GUI, and the visual element located under the pointer may have the focus. In GUIs that do not use a pointer, the input device may control the visual elements that have the focus by scrolling through the visual element. For example, the visual elements may be assigned a navigation order, and the focus is determined based on the visual element that currently has the focus using the input and the navigation order.

It is often difficult to quickly scroll through visual elements and stop immediately on the desired visual element. For example, the desired visual element may be passed and have to be returned to.

### SUMMARY

In accordance with the present disclosure there is provided a system for navigating a graphical user interface comprising a plurality of visual elements. The system comprises an input component for receiving an input and generating a navigational input based on the input, a visual element analyzer for analyzing visual elements to determine if the visual elements have an associated blockade condition, and for passing navigational inputs. The system further comprises a blockade condition analyzer for analyzing visual elements with an associated blockade to determine if the navigational input satisfies the blockade condition and an output component for receiving the navigational inputs passed from the visual element analyzer and for generating the input based on the navigational input.

In accordance with the present disclosure there is further provided a method of navigating a graphical user interface comprising a plurality of visual elements. The method comprises the steps of receiving an input and generating a navigational input based on the input, analyzing visual elements to determine if the visual elements have an associated blockade condition, generating the input based on the navigational input if the visual elements don't have an associated blockade condition, analyzing visual elements with an associated blockade to determine if the navigational input satisfies the blockade condition, and generating the input based on the navigational input if the blockade condition is satisfied.

In accordance with another embodiment of the present disclosure, there is provided a computer program product for navigating a graphical user interface comprising a plurality of visual elements. The computer program product comprises a computer readable medium embodying program code means for implementing a method of navigating the graphical user interface. The method comprises the steps of receiving an input and generating a navigational input based on the input, analyzing visual elements to determine if the visual elements have an associated blockade condition, generating the input based on the navigational input if the visual elements don't have an associated blockade condition, analyzing visual elements with an associated blockade to determine if the navigational input satisfies the blockade condition, and generating the input based on the navigational input if the blockade condition is satisfied.

In accordance with a further embodiment of the present disclosure, there is provided a propagated signal carrier carrying signals containing computer-executable instructions that can be read and executed by a computer, the computer-executable instructions being used to execute a method of navigating a graphical user interface comprising a plurality of visual elements. The method comprises the steps of receiving an input and generating a navigational input based on the input, analyzing visual elements to determine if the visual elements have an associated blockade condition, generating the input based on the navigational input if the visual elements don't have an associated blockade condition, analyzing visual elements with an associated blockade to determine if the navigational input satisfies the blockade condition, and generating the input based on the navigational input if the blockade condition is satisfied.

### BRIEF DESCRIPTION OF THE DRAWINGS

Embodiments of the system and method for navigating among visual elements of a graphical user interface will now be described by way of example with reference to the following drawings in which:
Figures 1a - d show in block diagrams, exemplary illustrations of graphical user interfaces (GUI), in accordance with an illustrative embodiment of the system for navigating among visual elements;
Figures 2a-b depict in exemplary block diagrams, the logical components of illustrative embodiments of environments for navigating among visual elements;
Figure 3 depicts in an exemplary block diagram, an illustrative embodiment of a device for navigating among visual elements;
Figure 4 depicts in a exemplary block diagram, logical components of an illustrative embodiment of a visual element object in accordance with an illustrative embodiment of the system for navigating among visual elements;
Figure 5 shows in a flow chart an illustrative embodiment of the functionality of blockade logic in accordance with an illustrative embodiment of the system and method for navigating among visual elements;
Figure 6 shows in an exemplary block diagram, an illustrative device implementing an illustrative embodiment of the system and method for navigating among visual elements;
Figure 7 shows in an exemplary block diagram, an illustrative device implementing an illustrative embodiment of the system and method for navigating among visual elements;
Figure 8 shows in a flow chart the steps of a method for navigating among visual elements in accordance with the present disclosure;
Figure 9 shows in a block diagram, illustrative components of a system for navigating among visual elements, in accordance with the present disclosure; and
Figure 10 shows in a detailed block diagram an example of a preferred handheld device adapted in accordance with an embodiment of the system and method for navigating among visual elements.

### DETAILED DESCRIPTION OF THE PREFERRED EMBODIMENTS

The system and method of navigating graphical user interface elements provides the ability to specify a condition to be met prior to navigating away from a current visual element. For example, if the visual elements are icons for a program, a blockade condition may be set on a particular icon. When the icon is navigated to, the blockade condition is checked and if it is satisfied, the navigation is blocked at the particular icon until navigational inputs no longer satisfy the blockade condition. By blocking the navigation at a particular icon, it is possible to quickly and easily navigate to the particular icons.

A system and method of the present patent disclosure will now be described with reference to various examples of how the embodiments can best be made and used. For convenience, like reference numerals are used throughout the description and several views of the drawings to indicate like or corresponding parts, wherein the various elements are not necessarily drawn to scale.

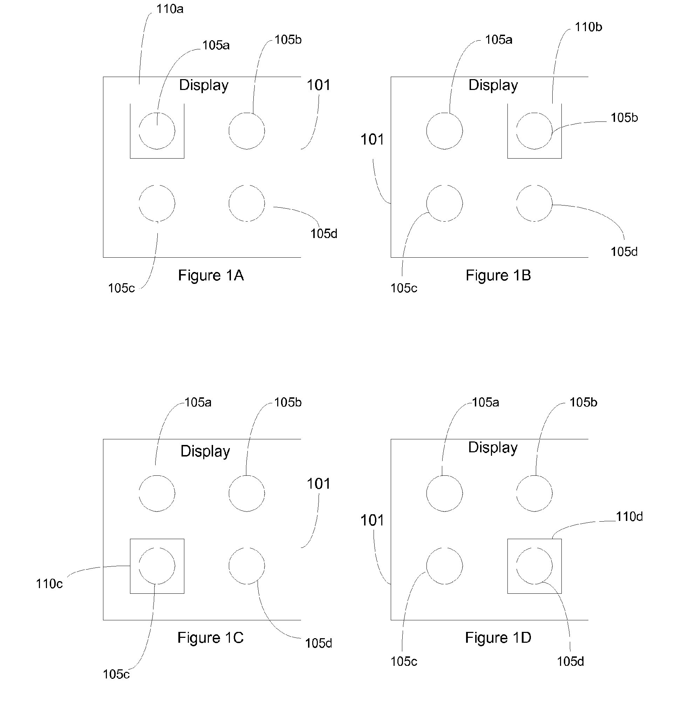

Figures 1a - d show in block diagrams exemplary illustrations of graphical user interfaces (GUI) 101, in accordance with the present application. The GUI 101 comprises a plurality of visual elements 105a - 105d. The visual elements 105a - 105b may be in an unfocused state or in a focused state. The focused state is represented schematically by box 110a - 110b.

The visual elements may be navigated among. The navigation among the visual elements 105a-d may occur in a specific navigation order. The order may be a one dimensional (1 D) order. If the navigation order is 1 D, then navigation among the visual elements would progress, for example, from Figure 1a, which depicts visual element 105a being in focus (represented by 110a), to Figure 1b, which depicts visual element 105b being in focus (represented by 110b). A visual element has a focus state for indicating when the visual element is the current navigational element. The focus state may describe how the visual element appears on the GUI 101. An unfocused state of a visual element may describe the appearance of the visual element on the GUI 101 when the visual element is not the current navigational element. When visual element 105b is in focus, navigation may move on to the next visual element in the specific 1D navigation order as depicted in Figure 1C, which depicts visual element 105 c being in focus (represented by box 110c). Navigation may also move back to the previous visual element in the specific 1 D navigation order, such as shown in Figure 1a. Figure 1d shows the visual element 105d being in focus (represented by box 110d). Figure 1d could be reached by navigating from Figure 1c, or possibly by Figure 1a, if the specific navigation order provides for looping of navigation among the visual elements.

The specific navigation order may also be a two dimensional order (2D). A 2D order allows for additional visual elements to be navigated to from the currently focused visual element. For example, from Figure 1a, a 2D order may allow for Figure 1b, or Figure 1c to be reached.

For the sake of clarity of the description the visual elements 105a-d will be referred to generally as 105. A visual element 105 that is in a focused state 110a-d will be referred to generally as 110.

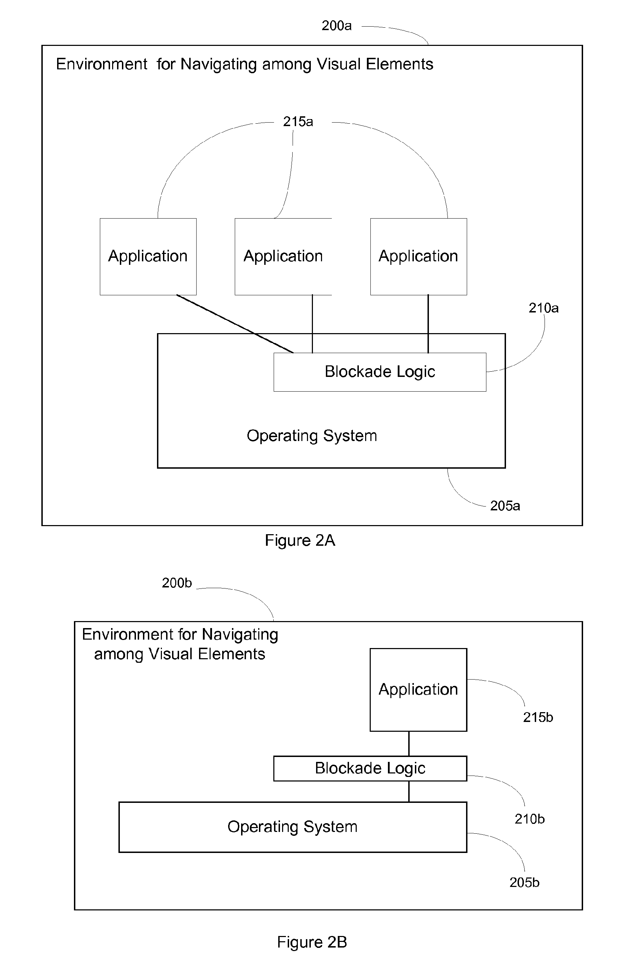

Figure 2A depicts in an exemplary block diagram, the logical components of an environment for navigating among visual elements 200a in accordance with an illustrative embodiment of the present disclosure. The environment 200a may comprise an operating system 205a, blockade logic 210a and applications 215a. It is understood that the logical components depicted in Figure 2A may be implemented in more or fewer logical components. For example, the blockade logic 210a may be separate from the operating system 205a. Alternatively, the environment may not include an operating system 205a, and/or the blockade logic may be incorporated into an application 215a.

Figure 2B depicts in an exemplary block diagram, the logical component of an environment for navigating among visual elements 200b in accordance with an alternative illustrative embodiment of the present disclosure. The environment 200b comprises blockade logic 210b between an operating system 205b and an application 215b.

For the sake of clarity of the description the environment 200a,b will be referred to generally as 200. An operating system 205a,b will be referred to generally as 205. Blockade logic 210a,b will be referred to generally as 210. An application 215a,b will be referred to generally as 215.

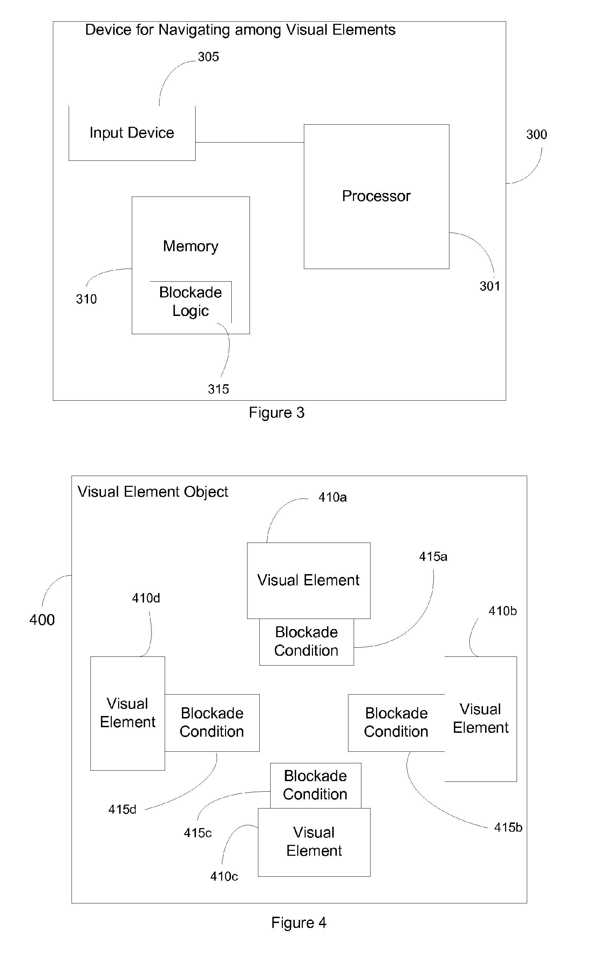

Figure 3 depicts in an exemplary block diagram, an illustrative embodiment of a device for navigating among visual elements 300 in accordance with the present disclosure. The device 300 comprises a processor 301 for executing statements. The statements may be stored in a memory 310. The statements may include statements for blockade logic, represented diagrammatically by box 315. The device 300 may also include an input device 305. It is understood that, for clarity, the figure 3 does not show all of the possible elements of various embodiments of a device for navigating among visual elements 105. For example in various embodiments, the memory 310 may include statements for an operating system 205 and applications 215. Additionally the device 300 may comprise various additional input devices (not shown). The device 300 may also include various output devices (not shown).

The navigation among the visual elements 105 may be controlled by the input device 305. The input device 305 provides navigational inputs for controlling the navigation among the visual elements 105. The navigational inputs may comprise information regarding the navigation direction. For example in 1 D it may be representative of left/right or up/down. In a 2D navigation order, the direction may comprise information regarding movement in the two dimensions, for example, x and y coordinates indicating movement amount and direction of movement in each dimension. The navigational inputs may also comprise information regarding a time that the navigational inputs occurred.

The navigational order may be provided in various ways. The visual elements 105 may be represented by objects, each of the object indicating a previous and next visual element 105 in the navigation order. If the navigation order is 2D, the objects may further include third and fourth visual element for indicating the next and previous visual elements in the additional direction. Alternatively the navigation order may be specified in a separate structure such as a file or navigation object.

Figure 4 depicts in a exemplary block diagram, logical components of an illustrative embodiment visual element object 400. The visual element object 400 of figure 4 depicts a visual element that provides for a 2D navigation order. The visual element object 400 indicates the visual elements that can be navigated to. This is indicated diagrammatically as boxes 410a-d. Visual element indicated by 410a may be navigated to when, for example an 'up' navigational input is received. Visual element indicated by 410b may be navigated to when, for example a 'right' navigational input is received. Visual element indicated by 410c may be navigated to when, for example a 'down' navigational input is received. Visual element indicated by 410d may be navigated to when, for example an 'left' navigational input is received. It is understood that the visual element object 400 does not require all of the visual element navigation indications 410a-d. Each visual element navigation indication 410a-d may include an associated blockade condition 415a-d that must be met in order to navigate from the current visual element object 400, to a visual element indicated by the visual element indication 410a-d. The visual element object may include visual element information for describing the visual element and how the visual element should be displayed on the GUI 101.

For the sake of clarity and without the loss of generality, the blockade conditions represented by 415a-d will be referred to as blockade condition 415, and the visual element navigation indication 410a-d will be referred to as 410.

A blockade may be placed on a visual element 105. A blockade on a visual element 105 includes a blockade condition 405. In order to navigate from a blocked visual element 105 (that is a visual that comprises a blockaded condition) in the focused state 110 to another visual element specified in the navigation order, for example by the visual element navigation indication 410, the blockade condition 415 must be met. If the blockade condition 415 is met then the navigation input is passed onto applications 215 as may normally occur. If the blockade condition 415 is not met, the navigation input is dropped. As a result of the navigational input being dropped the navigation input may not be received by an application 215, and from the point of view of the application 215, the navigation input did not occur.

The blockade condition 415 may be specified in various manners depending on the requirement of the GUI 101. For example, a blockade condition 415 may indicate a blockade time. The blockade time may indicate, for example, a minimum time period that must pass between when a visual element 105 is navigated to and when it can be navigated from. Alternatively, the blockade condition 415 may indicate a number of navigational inputs that must occur between when a visual element 105 is navigated to and when it can be navigated from. A complex blockade condition may be a combination of various blockade conditions 415. For example, a complex blockade condition may indicate that 4 navigational inputs must be received or 3 seconds must have passed before the visual element 105 may be navigated from.

The blockade conditions 415 may be created in various ways. For example, the visual elements 105 may be represented by objects, which include blockade condition 415 information. A single blockade condition 415 may be specified for each visual element 105. Alternatively or additionally, multiple blockade conditions 415 may be specified. The multiple blockade conditions 415 may be required to be met depending on the direction of navigation. For example, in a 1 D navigation order, different blockade conditions 415 may be created for navigating to the next visual element 410 or the previous visual element 410. If the order is multidimensional, various blockade conditions 415 may be created for navigation in the different directions to the appropriate visual element 410.

Alternatively or additionally to including the blockade condition 415 with a visual element object 400, the blockade conditions 415 may be stored in a separate structure such as a file, or blockade condition object.

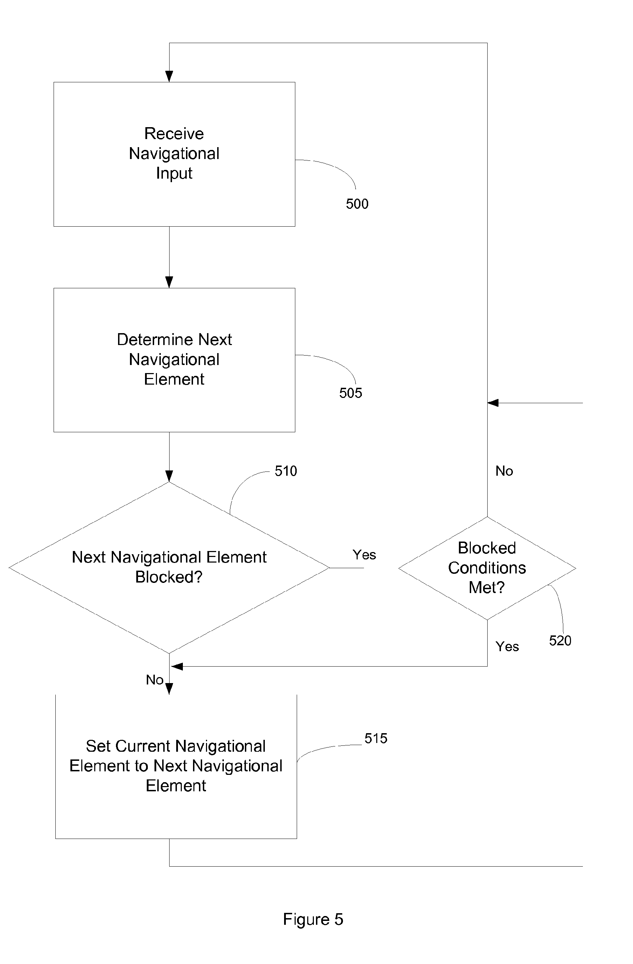

Figure 5 shows in a flow chart an illustrative embodiment of the functionality of blockade logic 210, 315 (referred to as 315 without the loss of generality) in accordance with the present disclosure. The blockade logic 315 may be stored as statements 315 in memory 310 for execution by a processor 301 of the device. The blockade logic 315 receives a new navigational input (500). The blockade logic 315 then determines the next navigational element (505). The next navigational element indicates the visual element that will be navigated to from the current navigation element based on the received navigation input (assuming that there are no blockade conditions, or that any blockade conditions are met). The next navigational element may indicate one of the visual element navigation indications 410. The current navigation element may indicate the visual element 105 that is currently in a focused state 110. The next navigation element may be determined using the navigation input and the specific navigation order information. For example the specific navigation order information may be the visual element navigation indications 410. The blockade logic 315 then determines if there is a blockade condition 415 for navigating to the next navigation element from the current navigation element (510). If there is no blockade condition 415 for navigating to the next navigation element, then the next navigation element is navigated to, which may require passing the navigational input to another component of the device, such as an operating system 205, a navigation sub system of the operating system (not shown), or applications 215 running on the device. The blockade logic 315 sets the current navigation element to the next navigation element (515) and the blockade logic 315 waits to receive another navigation input (500). If at step 510 the blockade logic 315 determines that there is a blockade condition 415 the blockade logic 315 determines if the blockade condition 415 has been met (520). If the blockade condition 415 has been met, then the blockade logic 315 proceeds to step 515 and sets the current navigation element to the current navigation element. If the blockade condition 415 has not been met, then the blockade logic 315 drops the navigational input and proceeds to step 500 and waits to receive another navigation input.

In determining if a blockade condition 415 has been met, the blockade logic 315 may require additional information. For example, if the blockade condition 415 specifies a navigation time, the blockade logic 315 requires information about the time at which the current visual element 105 was navigated to. This information may be stored when the current navigation element is updated to the next navigation element. If the blockade condition 415 specifies the number of navigational inputs to drop prior to navigating to the next navigation element, then the blockade logic 315 may require information about how many navigational inputs have been dropped since the current navigational element was navigated to.

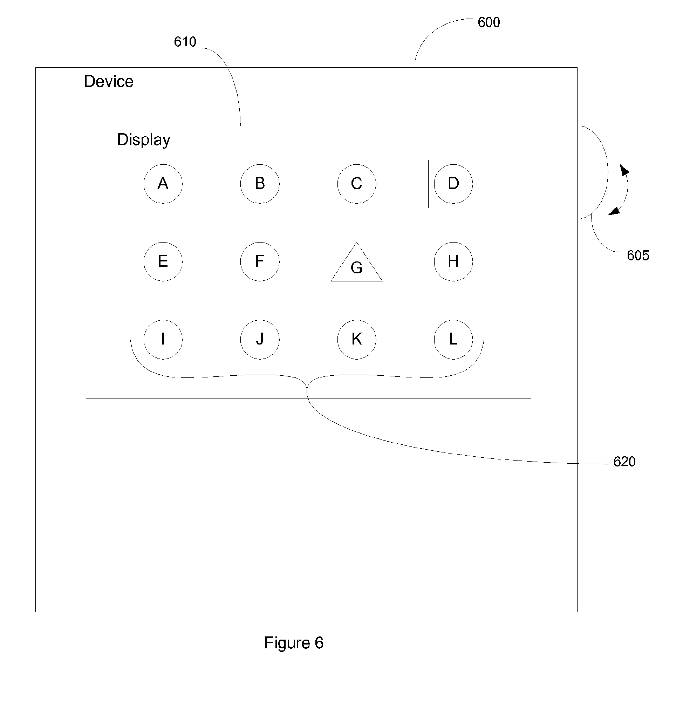

Figure 6 shows in an exemplary block diagram, a device 600 implementing an illustrative embodiment of a system for navigating among visual elements. For the sake of clarity, an exemplary operation of the device 600 will be described. The device 600 may be a handheld device. The handheld device 600 has an input device 605. The input device 605 is a scroll wheel. The navigation input of the scroll wheel 605 includes information about the direction of the movement, indicating up or down. It is understood that although the information about the direction of movement indicates either up or down, the navigation input may be used to navigate among visual elements in a 1 D navigation order.

The handheld device 600 includes a display 610. The display 610 displays a GUI 101 that includes a plurality of visual elements 620. The visual elements 620 may be, for example, icons for selecting an application to run. Icon 620D is shown as being the current navigation object. Icon 620G is a blocked icon. The blockade condition of icon 620G specifies that 3 navigation inputs should be dropped when navigating to the right, and no blockade condition is specified for navigating to the left.

A navigation input may navigate from the current navigation element to the next navigation element specified by the specific 1 D navigation order, assuming no blockade conditions or the blockade conditions are met. For example a navigation input of 'down', navigates from the current icon 620D to the next icon 620E on the right (or on the far left of the next row if it is the last icon of a row). A navigation input of 'up', navigates from the current icon 620D to the next icon 620C on the left (or on the far right of the previous row if it is the first icon of the previous row)

The specific 1 D navigation order is 620A <-> 620B <-> 620C <-> 620D <-> 620E <-> 620F <-> 620G [blockaded] <-> 620H <-> 620I <-> 620J <-> 620K <-> 620L. This specific 1 D navigation order does not provide for looping navigation, for example from 620A to and from 620L.

When a new navigation input is received, the navigation direction is determined. For example, when the scroll wheel 605 is scrolled down 1 click, the navigation direction is determined as to the right, and when it is scrolled up 1 click the navigation direction is determined as to the left. Using the navigation input navigation direction, the next navigation element is determined. For example, when a navigation direction of right is received when the icon 620D is in focus as shown, the next navigation element is determined as 620E. Once the navigation direction is determined, it is determined if there is a blockade condition on navigating from the current visual element 620D in that direction. For example the navigation direction is determined as 'right'. Since 620D does not have a blockade condition, the navigation input is passed, for example to the device operating system, resulting in the current navigation element being changed to icon 620E. Having navigated to icon 620E, it would be in the focused state, and icon 620D would be in the unfocused state. Another navigation input may be received indicating a navigation direction of 'right' again. Since no blockade condition exists on icon 620E, icon 620F is navigated to, making icon 620F in focus and 620E unfocused. Another navigation input may be received indicating a navigation direction of 'right' again. Since no blockade condition exists on icon 620F, icon 620G is navigated to, making icon 620G in focus and 620F unfocused. Another navigation input may be received indicating 'right' as the navigation direction again. However icon 620G has a blockade condition when navigating to the right from icon 620G, indicating that 3 navigation inputs should be dropped prior to navigating from. As a result the navigation input is dropped (1 dropped navigation input of 3). Another navigation input may be received indicating 'right' as the navigation direction again, and again the blockade condition will not have been met so the navigation input is dropped (2 of 3). Another navigation input may be received indicating 'right' as the navigation direction again, and again the blockade condition will not have been met so the navigation input is dropped (3 of 3). Another navigation input may be received indicating 'right' as the navigation direction again, however now the blockade condition is met, and so the navigation input is passed, allowing navigation from icon 620G to icon 620H. Icon 620H would then be in the focused state, and icon 620G would be in the unfocused state.

A navigation input may then be received indicating 'left' as the navigation direction. Since icon 620H does not have a blockade condition, icon 620G would be navigated to. Another navigation input may be received indicating 'left' as the navigation direction. As described above, icon 620G does not have a blockade condition for navigating from the icon 620G to the left, and so the navigation input is passed, and icon 620F is navigated to.

Although it may be desirable to have the navigation order correspond to the relative location of the visual elements as displayed by the GUI, it is not required to do so. From the above example described with reference to Figure 6, for example, it is possible to specify a navigation order of 620E<->620A<->620G(blockaded)<->620B.

The scroll wheel of the above description may be replaced or augmented with other input devices, such as for example. a thumbwheel, a joystick, or a combination of keys such as the up and down arrows on a keyboard. The input devices are well suited for providing navigation control in 1 D, it is understood that many different 2D input devices could be used, such as a mouse, trackball, touchpad, thumb pointer or scroll ball may also be used to control navigation in 1 D by ignoring or not using direction information from one of the dimensions.

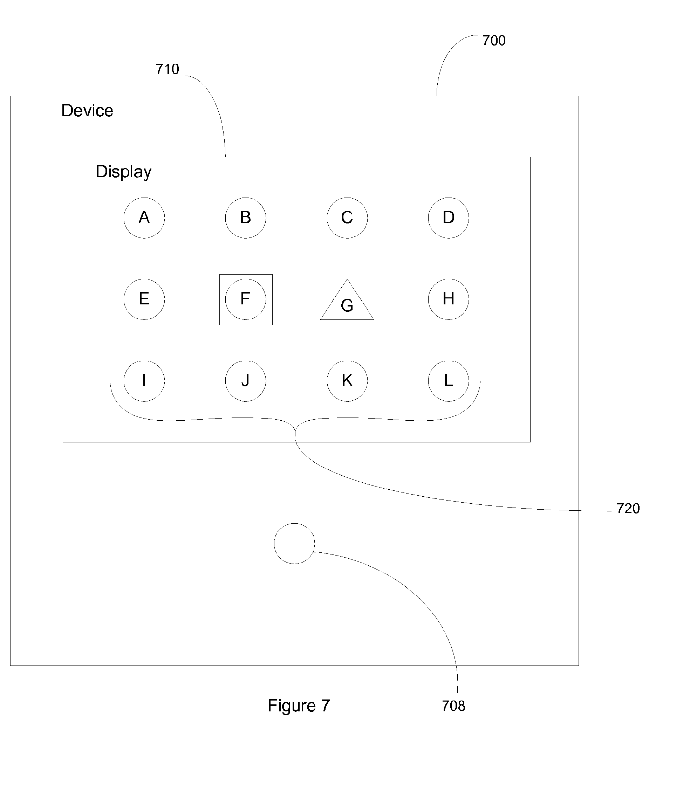

Figure 7 shows in an exemplary block diagram, a device 700 implementing an illustrative embodiment of the system for navigating among visual elements. For the sake of clarity, an exemplary operation of the device 700 will be described. The device 700 may be a handheld device. The handheld device 700 has an input device 705. The input device 705 is a track ball. The navigation input of the track ball includes information about the direction of the movement, indicating up or down and left or right. In this specific example, input from the track ball 705 is processed to indicate a navigational input of a single direction, for example 'right'. This may be done by determining if the movement in each direction has crossed a certain threshold, for example movement by 10 units in the positive x direction results in a navigational input of 'right'.

The handheld device 700 includes a display 610. The display 610 displays a GUI 101 that includes a plurality of visual elements 720. The visual elements 720 may be, for example, icons for selecting an application to run. Icon 720D is shown as being the current navigation object. Icon 720G is a blocked icon. The blockade condition of icon 720G is similar to that of 620G. It specifies that 3 navigation inputs should be dropped when navigating to the right, and no blockade condition is specified for navigating to the left. However, since the specific navigation order is 2D, the blocked visual element 720G may further describe blockade conditions for the additional navigation directions.

A navigation input may navigate from the current navigation element to the next navigation element specified by the specific 2D navigation order, assuming no blockade conditions or the blockade conditions are met. For example a navigation input of 'down', navigates from the current icon 720D to the icon in the row below, icon 720H. A navigation input of 'up', does not result in any navigation since the icon 720D is in the top row. As described above, if looping navigation was used, a navigation input of 'up' could result in navigating to visual element 720L. A navigation input of 'left' navigates from the current icon 720D to icon 720C. A navigation input of 'right' does not result in any navigation since the icon 720D is in the far right row. If looping navigation was used, a navigation input of right, could result in a navigation to icon 720A.

A specific 2D navigation order is specified. As described above, the specific 2D navigation order may be specified in various ways. The specific 2D navigation order should generally specify 4 visual elements that may be navigated to from a current visual element. Each visual element does not require to have all 4 navigation elements described. Examples of the specific 2D navigation order are described below, with square brackets indicating a blockade condition.
Icon 720A: UP: none; DOWN: 720E; RIGHT: 720B; LEFT: none
Icon 720B: UP: none; DOWN: 720F; RIGHT: 720C; LEFT: 720A
Icon 720C: UP: none; DOWN: 720G; RIGHT: 720D; LEFT: 720A
Icon 720D: UP: none; DOWN: 7201; RIGHT: none; LEFT: 720C
Icon 720E: UP: 720A; DOWN: 720J; RIGHT: 720F; LEFT: none
Icon 720F: UP: 720B; DOWN: 720K; RIGHT: 720G; LEFT: 720E
Icon 720G: UP: 720C; DOWN: [720L]; RIGHT: [720H]; LEFT: 720F
Icon 720H: UP: 720D; DOWN: 720E; RIGHT: none; LEFT: 720G
Icon 7201: UP: 720E; DOWN: none; RIGHT: 720J; LEFT: none
Icon 720J: UP: 720F; DOWN: none; RIGHT: 720K; LEFT: 720I
Icon 720K: UP: 720G; DOWN: none; RIGHT: 720L; LEFT: 720J
Icon 720L: UP: 720H; DOWN: none; RIGHT: none; LEFT: 720K

The operation of the device 700 is similar to that of device 600. When a navigation input is received, the direction is determined, the navigation order is checked to see if the visual element of the current navigation element has a blockade condition in that direction, and if it does the blockade condition is checked to see if it has been satisfied. However, the device 700 may allow navigation to more than two visual elements, and each navigation to the visual elements may have a blockade condition.

As depicted in figure 7, icon 720F initially is in the focused state. When the track ball is operated a navigation input may be generated. The navigation input may indicate the navigation direction. For example the navigation input may indicate a navigation direction of 'right'. As a result of this navigation input, icon 720G would gain the focus and icon 720H would change to the unfocused state. When a new navigation input is received, the navigation direction is again determined, and the current navigation element, icon 720G is checked to determine if there is a blockade condition for navigating from the current navigation element in the navigation direction. In this example, a navigation input of 'right' is received again. As indicated above, icon 720C has a blockade condition for navigating from the icon in the 'right' navigation direction. The blockade condition is checked to determine if the navigation input satisfies the blockade condition. Since the blockade condition is that 3 navigation inputs are dropped prior to being satisfied, it has not yet been satisfied, and the navigation input is dropped. Next a navigation input of 'up' is received. The blockade condition for navigating form the current navigation element in the 'up' navigation direction is checked. Since no blockade condition exists for the 'up' navigation direction, the navigation input is passed to an operating system of the device 700. Icon 720C receives the focus and icon 720G changes to the unfocused state.

Blockade conditions may be set for the various visual elements. In an illustrative embodiment of setting blockade conditions, an application may be used to setup the blockade conditions. The application may display the visual elements of a GUI, and allow a user to specify a blockade condition. This may be done through a series of wizards or prompts. For example, the blockade setting application may present an interface that allows a visual element to be selected. A prompt may be presented that provides for the specification of the blockade condition. A first prompt may specify the navigation direction the blockade condition is associated with. The first prompt may provide for specifying that the same blockade condition be used for all navigation directions, or providing for individual navigation directions to be selected. Once the navigation direction is selected, a second prompt may be generated for allowing the blockade condition to be specified. The second prompt may for example allow for specifying the number of dropped navigation inputs, a minimum elapsed time before allowing navigation, or a minimum movement amount of the input in the navigation direction. Once the blockade condition is set, the blockade setting application may allow for testing the blockades that have been set. The blockade setting application may display the GUI with the visual elements, and newly set blockade conditions. The application provides for navigating among the visual elements. A user may use this to determine if the blockade conditions are appropriate. The blockade setting application may exit the blockade testing mode by a specific input, for example pressing a key on the device. After exiting the testing mode, the blockade setting application may present a prompt for selecting whether to accept the blockades or to modify the blockades. Once the blockade conditions are accepted, the blockade setting application may modify or create the blockade structures for implementing the newly created or modified blockade conditions.

Additionally or alternatively, the device may be provided with other options of creating or modifying blockade conditions. For example an alternative input, for example a right click on a mouse or pressing shift enter on a keypad, may be used to present a menu for modifying or creating a blockade condition on an individual visual element.

Additionally or alternatively, the device may automatically set blockade conditions. For example, the amount of times a specific visual element is selected may be monitored. If this amount crosses a threshold, a blockade condition may automatically be set for the specific visual element.

Additionally or alternatively, the visual elements of the GUI may be grouped into categories. For example, the visual elements 720 may be grouped into vertical groups. So that visual elements 720A,E,I are in a group; 720B,F,J are in a group; 720C,G,K are in a group; and 720D,H,L are in a group. The blockade may then be set for the group of visual elements.

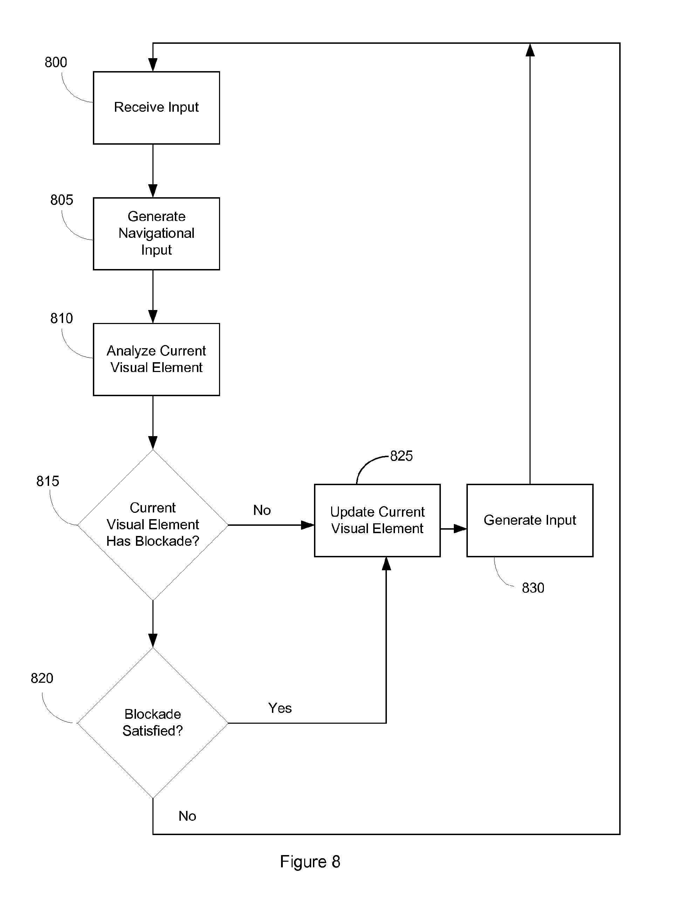

Figure 8 shows in a flow chart the steps of a method for navigating among visual elements in accordance with the present disclosure. The method begins at step 800 when an input is received. The input may be received from an operating system or directly from an input device. A navigational input is then generated from the input at step 805. The generated navigational input comprises a navigational direction and an input time. At step 810 the current visual element is analyzed to determine if the current visual element has a blockade associated with the navigational direction of the navigational input. If at step 815 it is determined that the current visual element has a blockade associated with the navigational direction, the navigational input, and the current visual element may be passed on to be analyzed at step 820. If at step 815, it is determined that the current visual element does not have a blockade associated with the navigational direction, the navigational input is passed to step 825. At step 825, the current visual element is updated to the next visual element associated with the navigational direction. At step 830 an input is generated from the navigational input. The input may be received by an operating system or directly by applications. The method then returns to step 800 and awaits another input. At step 820, the blockade associated with the current visual element is analyzed to determine if the navigational input satisfies the blockade. If the blockade is satisfied then the navigational input is passed to step 825. If the blockade condition is not satisfied, then the method returns to step 800 and awaits another input.

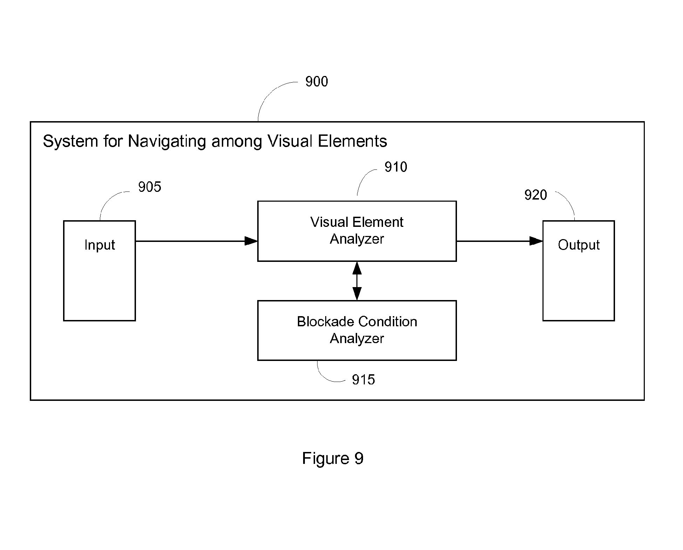

Figure 9 shows in a block diagram, illustrative components a system 900 for navigating among a plurality of visual elements. The system 900 may implement blockade logic, in accordance with the present disclosure. The blockade logic of system 900 may comprise an input component 905 that receives inputs and generate navigational inputs. The generated navigational inputs may include the navigation direction and input time. The input component 905 may pass the generated navigational input to a visual element analyzer component 910. The visual element analyzer component 910 determines if the current visual element has a blockade condition associated with the navigation direction of the navigational input. The visual element analyzer component 910 may send the navigational input to the blockade condition analyzer component 915. The blockade condition analyzer component 915 determines if the blockade condition associated with the current visual element is satisfied by the navigational input. The visual element analyzer component 910 may send a navigational input to an output component 920. The navigational input sent to the output component 920 may be dependent upon whether the current visual element has an associated blockade condition, and whether the blockade condition (if present) has been met.

The visual element analyzer component 910 may store the current visual element in a navigation order. If the visual element analyzer component 910 determines that the next visual element should be navigated to, the current visual element stored by the visual element analyzer component 910 can be updated. The current visual element may be used by the blockade condition analyzer component 915 to determine whether the blockade condition has been met.

The blockade condition analyzer component 915 may receive the current navigational input as well as the current visual element. The blockade condition analyzer component 915 may store the current visual element in a visual element table. When a visual element is analyzed to determine if its blockade condition has been satisfied, the blockade condition analyzer component 915 may check the visual element table to determine if it is currently in the table. If the visual element is not found in the table, a new entry may be added. The table entry may include a visual element identifier to uniquely identify each visual element, as well as the current blockade condition state. Once the visual element entry is found, or created, the blockade condition analyzer component 915 updates the blockade condition state of the table entry according to the navigation input. The blockade condition analyzer component 915 then determines if the blockade condition state of the visual element table entry meets the blockade condition associated with the navigational direction of the visual element. The result of the determination is then returned to the visual element analyzer component, which may send the appropriate navigational input to the output component 920.

The blockade condition analyzer component 915 may receive a visual element when determining if the blockade condition has been met. Alternatively the blockade condition analyzer component 915 may be incorporated into the visual element analyzer component 910 or as part of the visual element objects (see figure 4).

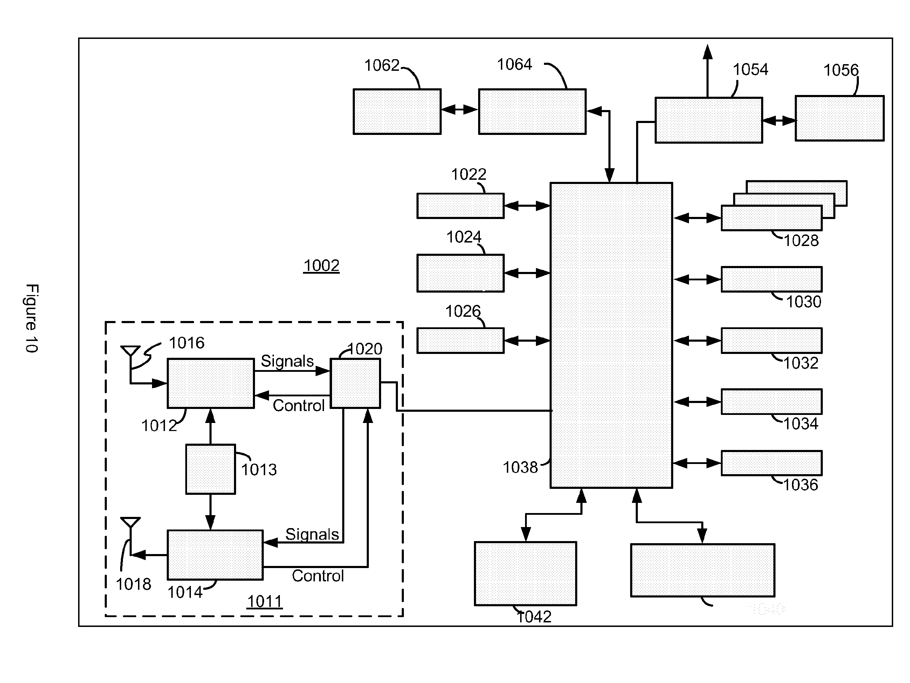

Figure 10 shows in a detailed block diagram an example of a preferred handheld device 1002 that may be adapted in accordance with an embodiment of the system and method for navigating among visual elements, as described. Handheld device 1002 is preferably a two-way communication device having at least voice and advanced data communication capabilities, including the capability to communicate with other computer systems. Depending on the functionality provided by handheld device 1002, it may be referred to as a data messaging device, a two-way pager, a cellular telephone with data messaging capabilities, a wireless Internet appliance, or a data communication device (with or without telephony capabilities). Handheld device 1002 may communicate with any one of a plurality of base station transceiver systems (not shown) within its geographic coverage area.

Handheld device 1002 will normally incorporate a communication subsystem 1011, which includes a receiver 1012, a transmitter 1014, and associated components, such as one or more (preferably embedded or internal) antenna elements 1016 and 1018, local oscillators (LOs) 1013, and a processing module such as a digital signal processor (DSP) 1020. As will be apparent to those skilled in the field of communications, particular design of communication subsystem 1011 depends on the communication network in which handheld device 1002 is intended to operate.

Handheld device 1002 may send and receive communication signals over the network after required network registration or activation procedures have been completed. Signals received by antenna 1016 through the network are input to receiver 1012, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 1020. In a similar manner, signals to be transmitted are processed, including modulation and encoding, for example, by DSP 1020. These DSP-processed signals are input to transmitter 1014 for digital-to-analog (D/A) conversion, frequency up conversion, filtering, amplification and transmission over communication network via antenna 1018. DSP 1020 not only processes communication signals, but also provides for receiver and transmitter control. For example, the gains applied to communication signals in receiver 1012 and transmitter 1014 may be adaptively controlled through automatic gain control algorithms implemented in DSP 1020.

Network access is associated with a subscriber or user of handheld device 1002, and therefore handheld device 1002 comprises a memory module 1062, memory module card or a Removable User Identity Module (R-UIM), to be inserted in or connected to an interface 1064 in order to operate in the network. Alternatively, memory module 1062 may be a non-volatile memory that is programmed with configuration data by a service provider so that mobile station 1002 may operate in the network. Since handheld device 1002 is a mobile battery-powered device, it also includes a battery interface 1054 for receiving one or more rechargeable batteries 1056. Such a battery 1056 provides electrical power to most if not all electrical circuitry in handheld device 1002, and battery interface 1054 provides for a mechanical and electrical connection for it. The battery interface 1054 is coupled to a regulator that provides power V+ to all of the circuitry.

Handheld device 1002 includes a microprocessor 1038 that controls overall operation of mobile station 1002. Communication functions, including at least data and voice communications, are performed through communication subsystem 1011. Microprocessor 1038 also interacts with additional device subsystems such as a display 1022, a flash memory 1024, a random access memory (RAM) 1026, auxiliary input/output (I/O) subsystems 1028, a serial port 1030, a keyboard 1032, a speaker 1034, a microphone 1036, a short-range communications subsystem 1040, and any other device subsystems generally designated at 1042. Some of the subsystems shown perform communication-related functions, whereas other subsystems may provide "resident" or on-device functions. Notably, some subsystems, such as keyboard 1032 and display 1022, for example, may be used for both communication-related functions, such as entering a text message for transmission over a communication network, and device-resident functions such as a calculator or task list. Operating system software used by microprocessor 1038 is preferably stored in a persistent store such as flash memory 1024, which may alternatively be a read-only memory (ROM) or similar storage element (not shown). Those skilled in the art will appreciate that the operating system, specific device applications, or parts thereof, may be temporarily loaded into a volatile store such as RAM 1026.

Microprocessor 1038, in addition to its operating system functions, preferably enables execution of software applications on handheld device 1002. A predetermined set of applications that control basic device operations, including at least data and voice communication applications, will normally be installed on handheld device 1002 during its manufacture. A preferred application that may be loaded onto handheld device 1002 may be a personal information manager (PIM) application having the ability to organize and manage data items relating to a user such as, but not limited to, e-mail, calendar events, voice mails, appointments, and task items. Naturally, one or more memory stores are available on handheld device 1002 and memory module 1062 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on handheld device 1002 with respect to such items. This is especially advantageous where the host computer system is the mobile station user's office or enterprise computer system. Additional applications may also be loaded onto handheld device 1002 through network, an auxiliary I/O subsystem 1028, serial port 1030, short-range communications subsystem 1040, or any other suitable subsystem 1042, and installed by a user in RAM 1026 or preferably a non-volatile store (not shown) for execution by microprocessor 1038. Such flexibility in application installation increases the functionality of handheld device 1002 and may provide enhanced on-device functions, communication-related functions, or both. For example, secure communication applications may enable electronic commerce functions and other such financial transactions to be performed using handheld device 1002.

In a data communication mode, a received signal such as a text message, an e-mail message, or web page download will be processed by communication subsystem 1011 and input to microprocessor 1038. Microprocessor 1038 will preferably further process the signal for output to display 1022 or alternatively to auxiliary I/O device 1028. A user of handheld device 1002 may also compose data items, such as e-mail messages, for example, using keyboard 1032 in conjunction with display 1022 and possibly auxiliary I/O device 1028. Keyboard 1032 is preferably a complete alphanumeric keyboard and/or telephone-type keypad. These composed items may be transmitted over a communication network through communication subsystem 1011.

For voice communications, the overall operation of handheld device 1002 is substantially similar, except that the received signals would be output to speaker 1034 and signals for transmission would be generated by microphone 1036. Alternative voice or audio I/O subsystems, such as a voice message recording subsystem, may also be implemented. Although voice or audio signal output is preferably accomplished primarily through speaker 1034, display 1022 may also be used to provide an indication of the identity of a calling party, duration of a voice call, or other voice call related information, as some examples.

Serial port 1030 in Figure 10 is normally implemented in a personal digital assistant (PDA)-type communication device for which synchronization with a user's desktop computer is possible. Serial port 1030 is a desirable, albeit optional, component. Serial port 1030 enables a user to set preferences through an external device or software application and extends the capabilities of handheld device 1002 by providing for information or software downloads to handheld device 1002 other than through a wireless communication network. The alternate download path may, for example, be used to load an encryption key onto handheld device 1002 through a direct and thus reliable and trusted connection to thereby provide secure device communication.

Short-range communications subsystem 1040 is an additional optional component that provides for communication between handheld device 1002 and different systems or devices, which need not necessarily be similar devices. For example, subsystem 1040 may include an infrared device and associated circuits and components, or a Bluetooth™ communication module to provide for communication with similarly enabled systems and devices. Bluetooth™ is a registered trademark of Bluetooth SIG, Inc.

Handheld device 1002 may be configured such as via software (instructions and data stored in memory) to provide the system and method for navigating among visual elements described above.

The systems and methods according to the present patent disclosure may be implemented by any hardware, software or a combination of hardware and software having the above described functions. The software code, either in its entirety or a part thereof, may be stored in a computer-readable memory. Further, a computer data signal representing the software code which may be embedded in a carrier wave may be transmitted via a communication network. Such a computer-readable memory and a computer data signal are also within the scope of the present patent disclosure, as well as the hardware, software and the combination thereof.

While particular embodiments of the present patent disclosure have been shown and described, changes and modifications may be made to such embodiments without departing from the true scope of the patent disclosure.

## Claims

1. A system for navigating a graphical user interface (900) comprising a plurality of visual elements (620), the system comprising:
an input component (905) for receiving an input and generating a navigational input based on the input;
a visual element analyzer (910) for analyzing visual elements (410) to determine if the visual elements (410) have an associated blockade condition (415), and for passing navigational inputs;
a blockade condition analyzer (915) for analyzing visual elements (410) with an associated blockade (415) to determine if the navigational input satisfies the blockade condition; and
an output component (920) for receiving the navigational inputs passed from the visual element analyzer (910) and for generating the input based on the navigational input.

2. The system as claimed in claim 1, further comprising a navigation order for specifying the navigation among the plurality of visual elements.

3. The system as claimed in claim 2, wherein each of the visual elements (410) comprises navigation order information specifying a next visual element (410) in the specific navigation order.

4. The system as claimed in claim 3, wherein the navigation order information of each of the visual elements (410) further specifies a previous visual element in the specific navigation order.

5. The system as claimed in any one of claims 2 to 4, wherein the specific navigation order is a one-dimensional order.

6. The system as claimed in any one of claims 2 to 4, wherein the specific navigation order is a two-dimensional order.

7. The system as claimed in claim 6, wherein the specific navigation information of each of the visual elements (410) further specifies:
a third visual element in the specific navigation order; and
a fourth visual element in the specific navigation order.

8. The system as claimed in any one of claims 2 to 7, further comprising a current navigation element for indicating a navigation position in the specific navigation order.

9. The system as claimed in claim 8, further comprising at least one input device (605) for providing a plurality of inputs to the input component, the plurality of inputs for changing the navigation position in the specific navigation order.

10. The system as claimed in any one of claims 2 to 9, wherein each of the visual elements (410) of the plurality of visual elements further comprising:
a focused state for indicating when the visual element is the current navigation element; and
an unfocused state for indicating when the visual element is not the current navigation element.

11. The system as claimed in claim 10, wherein a blockade subset comprises at least one visual element (410) of the plurality of visual elements, each visual element (410) of the blockade subset further comprises a blockade condition.

12. The system as claimed in claim 11, wherein the visual element analyzer (910) comprises logic for passing navigational inputs to the output component (920) when the navigation input satisfies a blockade condition (415); and logic for dropping navigational inputs of the plurality of navigational inputs when the navigational input does not satisfy the blockade condition (415) of the current navigation object.

13. The system as claimed in any one of claims 9 to 12, wherein each of the navigation inputs comprises:
a navigation direction; and
a navigation input time.

14. The system as claimed in claim 13, wherein the blockade condition (415) comprises an input delay for specifying a minimum time delay between the navigation input time of navigation inputs.

15. The system as claimed in claim 13, wherein the blockade condition (415) comprises a number of navigation inputs to drop.

16. The system as claimed in claim 13, wherein the navigation direction specifies one of:
a direction in one dimension; or
a first direction in a first dimension and a second direction in a second dimension.

17. The system as claimed in any one of claims 13 to 16, wherein the blockade condition (415) is based on the navigation direction of the current navigation object and the navigation direction of at least one previous navigation input.

18. A method of navigating a graphical user interface comprising a plurality of visual elements, the method comprising the steps of:
receiving an input (800) and generating a navigational input based on the input (805);
analyzing visual elements to determine if the visual elements have an associated blockade condition (810);
generating the input based on the navigational input (830) if the visual elements don't have an associated blockade condition;
analyzing visual elements with an associated blockade to determine if the navigational input satisfies the blockade condition (820); and
generating the input based on the navigational input (830) if the blockade condition is satisfied.

19. The method as claimed in claim 18, further comprising describing a specific navigation order of the navigation among the plurality of visual elements.

20. The method as claimed in claim 19, further comprising including navigation order information of each of the visual elements (410), the navigation order information specifying a next visual element (410) in the specific navigation order.

21. The method as claimed in claim 20, further comprises specifying a previous visual element (410) in the specific navigation order with the navigation order information.

22. The method as claimed in any one of claims 19 to 21, wherein the specific navigation order is a one-dimensional order.

23. The method as claimed in any one of claims 19 to 21, wherein the specific navigation order is a two-dimensional order.

24. The method as claimed in claim 23, further comprises specifying, in the navigation order information of each of the visual elements (410):
a third visual element in the specific navigation order; and
a fourth visual element in the specific navigation order.

25. The method as claimed in any one of claims 19 to 24, further comprising indicating a navigation position in the specific navigation order by a current navigation element.

26. The method as claimed in claim 25, further comprising providing a plurality of inputs (605), the plurality of inputs for changing the navigation position in the specific navigation order.

27. The method as claimed in any one of claims 19 to 26, further comprising:
indicating a focused state when the visual element is the current navigation element; and
indicating an unfocused state when the visual element is not the current navigation element.

28. The method as claimed in claim 27, further comprises including at least one visual element (410) of the plurality of visual elements in a blockade subset, each visual element of the blockade subset further comprises a blockade condition.

29. The method as claimed in claim 28, further comprises the step of dropping navigational inputs of the plurality of navigational inputs when the navigational input does not satisfy the blockade condition of the current navigation object.

30. The method as claimed in any one of claims 26 to 29, further comprising for each of the navigation inputs indicating:
a navigation direction; and
a navigation input time.

31. The method as claimed in claim 30, further comprising specifying a minimum time delay between the navigation input time of navigation inputs as the blockade condition.

32. The method as claimed in claim 30, further comprising specifying a number of navigation inputs to drop as the blockade condition.

33. The method as claimed in any one of claims 30 to 32, further comprising specifying, as the navigation direction, one of:
a direction in one dimension; or
a first direction in a first dimension and a second direction in a second dimension.

34. The method as claimed in any one of claims 30 to 33, further comprising basing the blockade condition on the navigation direction of the current navigation object and the navigation direction of at least one previous navigation input.

35. A computer program product for navigating a graphical user interface comprising a plurality of visual elements, the computer program product comprising a computer readable medium embodying program code means for implementing a method comprising the steps of:
receiving an input and generating a navigational input based on the input (800);
analyzing visual elements to determine if the visual elements have an associated blockade condition (805);
generating the input based on the navigational input (830) if the visual elements don't have an associated blockade condition;
analyzing visual elements with an associated blockade to determine if the navigational input satisfies the blockade condition (820); and
generating the input based on the navigational input (830) if the blockade condition is satisfied.

36. A propagated signal carrier carrying signals containing computer-executable instructions that can be read and executed by a computer, the computer-executable instructions being used to execute a method of navigating a graphical user interface comprising a plurality of visual elements, the method comprising the steps of:
receiving an input and generating a navigational input based on the input (800);
analyzing visual elements to determine if the visual elements have an associated blockade condition (805);
generating the input based on the navigational input (830) if the visual elements don't have an associated blockade condition;
analyzing visual elements with an associated blockade to determine if the navigational input satisfies the blockade condition (820); and
generating the input based on the navigational input (830) if the blockade condition is satisfied.

## Amended claims

### Amended claims in accordance with Rule 137(2) EPC.

**1.** A system for navigating a graphical user interface (900) comprising a plurality of visual elements (620) of which only a current visual element is in focus, the system comprising:
an input component (905) for receiving an input and generating a navigational input based on the input;
a visual element analyzer (910) for analyzing visual elements (410) to determine if the visual elements (410) have an associated blockade condition (415) that blocks navigation to another visual element, and for passing navigational inputs;
a blockade condition analyzer (915) for analyzing visual elements (410) with an associated blockade (415) to determine if the navigational input satisfies the blockade condition; and
an output component (920) for receiving the navigational inputs passed from the visual element analyzer (910) and for changing the focus to a next visual element based on the navigational input.

**2.** The system as claimed in claim 1, further comprising a navigation order for specifying the navigation among the plurality of visual elements.

**3.** The system as claimed in claim 2, wherein each of the visual elements (410) comprises navigation order information specifying a next visual element (410) in the specific navigation order.

**4.** The system as claimed in claim 3, wherein the navigation order information of each of the visual elements (410) further specifies a previous visual element in the specific navigation order.

**5.** The system as claimed in any one of claims 2 to 4, wherein the specific navigation order is a one-dimensional order.

**6.** The system as claimed in any one of claims 2 to 4, wherein the specific navigation order is a two-dimensional order.

**7.** The system as claimed in claim 6, wherein the specific navigation information of each of the visual elements (410) further specifies:
a third visual element in the specific navigation order; and
a fourth visual element in the specific navigation order.

**8.** The system as claimed in any one of claims 2 to 7, further comprising a current navigation element for indicating a navigation position in the specific navigation order.

**9.** The system as claimed in claim 8, further comprising at least one input device (605) for providing a plurality of inputs to the input component, the plurality of inputs for changing the navigation position in the specific navigation order.

**10.** The system as claimed in any one of claims 2 to 9, wherein each of the visual elements (410) of the plurality of visual elements further comprising:
a focused state for indicating when the visual element is the current navigation element; and
an unfocused state for indicating when the visual element is not the current navigation element.

**11.** The system as claimed in claim 10, wherein a blockade subset comprises at least one visual element (410) of the plurality of visual elements, each visual element (410) of the blockade subset further comprises a blockade condition.

**12.** The system as claimed in claim 11, wherein the visual element analyzer (910) comprises logic for passing navigational inputs to the output component (920) when the navigation input satisfies a blockade condition (415); and logic for dropping navigational inputs of the plurality of navigational inputs when the navigational input does not satisfy the blockade condition (415) of the current navigation object.

**13.** The system as claimed in any one of claims 9 to 12, wherein each of the navigation inputs comprises:
a navigation direction; and
a navigation input time.

**14.** The system as claimed in claim 13, wherein the blockade condition (415) comprises an input delay for specifying a minimum time delay between the navigation input time of navigation inputs.

**15.** The system as claimed in claim 13, wherein the blockade condition (415) comprises a number of navigation inputs to drop.

**16.** The system as claimed in claim 13, wherein the navigation direction specifies one of:
a direction in one dimension; or
a first direction in a first dimension and a second direction in a second dimension.

**17.** The system as claimed in any one of claims 13 to 16, wherein the blockade condition (415) is based on the navigation direction of the current navigation object and the navigation direction of at least one previous navigation input.

**18.** A method of navigating a graphical user interface comprising a plurality of visual elements of which only a current visual element is in focus, the method comprising the steps of:
receiving an input (800) and generating a navigational input based on the input (805);
analyzing visual elements to determine if the visual elements have an associated blockade condition (810) that blocks navigation to another visual element;
changing the focus to a next visual element based on the navigational input (830) if the visual elements don't have an associated blockade condition;
analyzing visual elements with an associated blockade to determine if the navigational input satisfies the blockade condition (820); and
generating the input based on the navigational input (830) if the blockade condition is satisfied.

**19.** The method as claimed in claim 18, further comprising describing a specific navigation order of the navigation among the plurality of visual elements.

**20.** The method as claimed in claim 19, further comprising including navigation order information of each of the visual elements (410), the navigation order information specifying a next visual element (410) in the specific navigation order.

**21.** The method as claimed in claim 20, further comprises specifying a previous visual element (410) in the specific navigation order with the navigation order information.

**22.** The method as claimed in any one of claims 19 to 21, wherein the specific navigation order is a one-dimensional order.

**23.** The method as claimed in any one of claims 19 to 21, wherein the specific navigation order is a two-dimensional order.

**24.** The method as claimed in claim 23, further comprises specifying, in the navigation order information of each of the visual elements (410):
a third visual element in the specific navigation order; and
a fourth visual element in the specific navigation order.

**25.** The method as claimed in any one of claims 19 to 24, further comprising indicating a navigation position in the specific navigation order by a current navigation element.

**26.** The method as claimed in claim 25, further comprising providing a plurality of inputs (605), the plurality of inputs for changing the navigation position in the specific navigation order.

**27.** The method as claimed in any one of claims 19 to 26, further comprising:
indicating a focused state when the visual element is the current navigation element; and
indicating an unfocused state when the visual element is not the current navigation element.

**28.** The method as claimed in claim 27, further comprises including at least one visual element (410) of the plurality of visual elements in a blockade subset, each visual element of the blockade subset further comprises a blockade condition.

**29.** The method as claimed in claim 28, further comprises the step of dropping navigational inputs of the plurality of navigational inputs when the navigational input does not satisfy the blockade condition of the current navigation object.

**30.** The method as claimed in any one of claims 26 to 29, further comprising for each of the navigation inputs indicating:
a navigation direction; and
a navigation input time.

**31.** The method as claimed in claim 30, further comprising specifying a minimum time delay between the navigation input time of navigation inputs as the blockade condition.

**32.** The method as claimed in claim 30, further comprising specifying a number of navigation inputs to drop as the blockade condition.

**33.** The method as claimed in any one of claims 30 to 32, further comprising specifying, as the navigation direction, one of:
a direction in one dimension; or
a first direction in a first dimension and a second direction in a second dimension.

**34.** The method as claimed in any one of claims 30 to 33, further comprising basing the blockade condition on the navigation direction of the current navigation object and the navigation direction of at least one previous navigation input.

**35.** A computer program product for navigating a graphical user interface comprising a plurality of visual elements of which only a current visual element is in focus, the computer program product comprising a computer readable medium embodying program code means for implementing a method comprising the steps of:
receiving an input and generating a navigational input based on the input (800);
analyzing visual elements to determine if the visual elements have an associated blockade condition (805) that blocks navigation to another visual element;
changing the focus to a next visual element based on the navigational input (830) if the visual elements don't have an associated blockade condition;
analyzing visual elements with an associated blockade to determine if the navigational input satisfies the blockade condition (820); and
changing the focus to a next visual element based on the navigational input (830) if the blockade condition is satisfied.

**36.** A propagated signal carrier carrying signals containing computer-executable instructions that can be read and executed by a computer, the computer-executable instructions being used to execute a method of navigating a graphical user interface comprising a plurality of visual elements of which only a current visual element is in focus , the method comprising the steps of:
receiving an input and generating a navigational input based on the input (800);
analyzing visual elements to determine if the visual elements have an associated blockade condition (805) that blocks navigation to another visual element;
changing the focus to a next visual element based on the navigational input (830) if the visual elements don't have an associated blockade condition;
analyzing visual elements with an associated blockade to determine if the navigational input satisfies the blockade condition (820); and
changing the focus to a next visual element on the navigational input (830) if the blockade condition is satisfied.
